# EUROPEAN PATENT APPLICATION

(11) **EP 1 524 548 A1**
(43) Date of publication of application: **20.04.2005**
(21) Application number: 03292560.4
(22) Date of filing: 14.10.2003
(51) Int. Cl.: G02F 1/01, H04B 10/155

(54) **Stabilization of modulators for rz-modulation formats**

(71) Applicant: ALCATEL, 75008 Paris (FR)
(72) Inventor: Idler, Wilfried, 71706 Markgröningen (DE); Klekamp, Dr. Axel, 71706 Markgröningen (DE)
(74) Representative: Rausch, Gabriele, Dr.

(57) **Abstract**

In an optical transmission system, employing an RZ modulation scheme to an optical signal carrying a data signal (D) having a data rate B, the operating point of a Mach-Zehnder device (MZM2) biased at a quadrature bias point is controlled by monitoring a frequency line in the output signal of the device (MZM2) at a frequency of B/2, i.e., at a value of half the data rate modulated to the optical signal, and by adjusting the bias voltage (U_{B}) of the device (MZM2) to drive the intensity of this line to a minimum.

## Description

### Field of the Invention

The present invention relates to the field of telecommunications and more particularly to a modulator in an optical transmitter for generating RZ modulated optical signals.

### Background of the Invention

For long-haul optical signal transmission, information to be transmitted is modulated onto an optical carrier signal and transmitted over an optical fiber link. Due to dispersion and other physical effects in the optical fiber, the modulated optical signal is subject to distortion that limits the usable data rate and the span length the signal can pass without signal regeneration.

Currently, next generation transmission systems using bitrates in the range of 40 Gbit/s - in particular 42,6 Gbit/s - are being developed. The development of cost-effective 43 Gbit/s transmission systems, however, requires comprehensive evaluations of modulation formats regarding system performance and tolerances. Optical signal-to-noise (OSNR) sensitivity, penalty by residual chromatic dispersion (CD) and differential group delay (DGD) due to first order polarization mode dispersion (PMD) are of major interest for the system design.

There exist basically two modulation schemes, namely intensity modulation also known as amplitude shift keying (ASK) and phase modulation, which is also referred to as differential phase shift keying (DPSK). ASK is essentially a simple on/off modulation of the carrier signal. DPSK on the other hand is a modulation where the phase of the carrier signal is discretely varied in relation to the phase of the immediately preceding signal element and in accordance with the data being transmitted, while the amplitude of the DPSK modulated signal is typically constant. Classical DPSK is thus a non-return-to-zero (NRZ) coding scheme.

Whilst amplitude shift keying is mainly used today, it has been shown that differential phase shift keying has certain advantages at higher bitrates. In particular, the inventors have demonstrated that the best performance can be achieved with a DPSK modulation with additional amplitude modulation, a modulation scheme that is referred to as return-to-zero DPSK (RZ-DPSK). A survey on RZ and NRZ modulation formats by the inventors can be found in the conference paper "System Performance and Tolerances of 43 Gb/s ASK and DPSK modulation formats", W. Idler et al, ECOC 22-26 Sept. 2003.

The article "Suppression of Cross-Gain Modulation in SOA Using RZ-DPSK Modulation Format" by P. Cho et al, IEEE Photonics Technology Letters, vol 15 no. 1, Jan 2003 pages 162 to 164 shows in an experimental setup the generation of a RZ-DPSK modulated signal. The setup uses a first modulator to create the RZ modulation and a second modulator to add the NRZ data modulation.

Another modulator setup that generates RZ-DPSK modulation is shown in the United States Patent Application Publication US 2003/0007216 A1. It uses a pulse carver, not described in any more detail, to generate a RZ-modulated signal from a continuous wave (cw) input signal and a subsequent PSK modulator that modulates the phase of the light pulses with differential data.

European Patent Application EP 1 271 808 A2 describes an optical transmitter that uses an optical phase modulating unit to generate an encoded DPSK phase modulated signal and an optical filter unit to convert the phase modulated signal to an RZ intensity modulated signal.

All these RZ modulation formats apply an RZ clock signal and an NRZ data signal to the optical carrier signal. The modulator that adds the RZ clock signal must be accurately set to its operating point by an appropriate bias voltage. This operating point, however, may drift due to thermal effects and thus a stabilization of the modulator is required. One way to stabilize the modulator is a temperature stabilization, a method that is very expensive and has a high power consumption. Another way is to control the bias voltage using some kind of dithering technique. Dithering of the channel wavelength would, however, introduce some system penalties.

US 6,278,539 describes an optical modulator where an additional low frequency signal is superimposed to the modulation and detected at the signal output to control the operating point of the modulator. A similar approach is also shown in US 6,317,249.

It is an object of the present invention to provide a simple and cost-effective method of stabilizing the operating point of a modulator utilizing an RZ modulation scheme which has lower adverse effects on the system performance.

### Summary of the Invention

These and other objects that appear below are achieved by monitoring a signal component of the output signal of an external Mach-Zehnder modulator applying an RZ modulation to an optical carrier signal at half the data rate modulated to the signal and by controlling the operating point of the modulator to drive the intensity of this signal component to a minimum.

This method allows to accurately control the operating point of the modulator with a very simple control loop and provides stable operation of all tributaries within the data signal.

The invention can also be applied to other Mach-Zehnder devices that are biased to a quadrature bias point such as Mach-Zehnder interferometers used as demodulators in an optical receiver.

In other words, the invention controls, in an optical transmission system, employing an RZ modulation scheme to an optical signal carrying a data signal having a data rate B, the operating point of a Mach-Zehnder device biased at a quadrature bias point by monitoring a frequency line in the output signal of the device at frequency B/2, i.e., at a value of half the data rate modulated to the optical signal, and by adjusting the bias voltage of the device to drive the intensity of this line to a minimum.

### Brief Description of the Drawings

A preferred embodiment of the present invention will now be described with reference to the accompanying drawings in which
- figure 1: shows a conventional transmitter using two MZMs to generate an RZ-DPSK modulated signal;
- figure 2: a balanced differential drive z-cut MZM;
- figure 3: shows in a first diagram the phase deviation in a modulator branch as a function of the bias voltage and different operating points;
- figure 4: the control loop employed according to the invention to stabilize the modulator; and
- figure 5: shows in a second diagram the signal intensity over the frequency.

### Detailed Description of the Invention

The most-commonly used external modulator type is the Mach-Zehnder modulator (MZM) and in particular the MZM based on LiNbO₃ technology. The linear electro-optic effect that is used to produce a phase change in the branches of the Mach-Zehnder modulator is known as the Pockels-effect. For LiNbO₃, the application of an electric field results in a change in the refractive index and therefore varies the phase of the propagating light. The strength of this electro-optic effect is dependent on the direction of the applied electrical field and the orientation of the LiNbO₃ crystal planes.

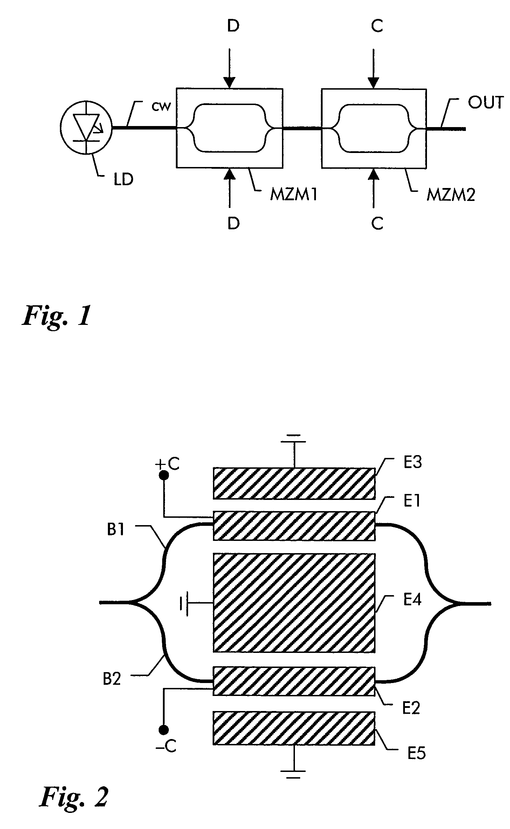

Figure 1 shows a modulator setup for generating RZ-DPSK modulation. A semiconductor laser diode LD emits a continuous wave light signal cw. Light signal cw is applied to a first Mach-Zender modulator MZM1, which is driven by a data signal D. MZM1 acts as a phase modulator and applies a NRZ-DPSK modulation to the light signal cw. The NRZ-DPSK modulated signal is then fed to a second Mach-Zender modulator MZM2, which is driven in push-pull configuration for chirp-free operation by a sinusoidal clock signal C and acts as an amplitude modulator. The output of the second modulator MZM2 is an RZ-DPSK modulated optical signal. Both modulators are LiNbO₃ modulators.

It has to be noted that a Mach-Zender modulator can be used for both, as a phase modulator and as an amplitude modulator. For amplitude modulation, electrical fields of different polarization are applied to the two branches, so that the signal intensity at the output varies due to interference between the signals from the two branches, while for phase modulation, the field strength in the two braches would have equal polarization to apply an equal phase shift to the signals in both branches.

Figure 2 shows the second modulator MZM2 from figure 1 in more detail. It is a z-cut LiNbO₃ modulator, which means that the LiNbO₃ crystal is cut perpendicular to its z-axis. LiNbO3 is an anisotropic material and the z-axis of the crystal is the direction which shows the strongest Pockels effect.

Two copper electrodes E1 and E2 are arranged on top of the two modulator braches B1 and B2, respectively. Electrodes E3 and E5 and common center electrode E3 are arranged sideways to the modulator braches and are connected to ground while modulating voltage signals are connected to electrodes E1 and E2.

When a voltage is applied to for example electrode E1, an electric field with an orientation in the z-direction of the crystal is generated which causes a change of the refractive index in waveguide branch B1. The electrode placement in this case is such that a voltage of equal sign at electrodes E1 and E2 results in an electric field of the same orientation and thus of an equal change of the refractive index in the two branches B1, B2. For amplitude modulation, voltage signals of opposite sign are thus required. Therefore, a sinusoidal clock signal C is applied to electrode E1 and a complementary clock signal -C to electrode E2.

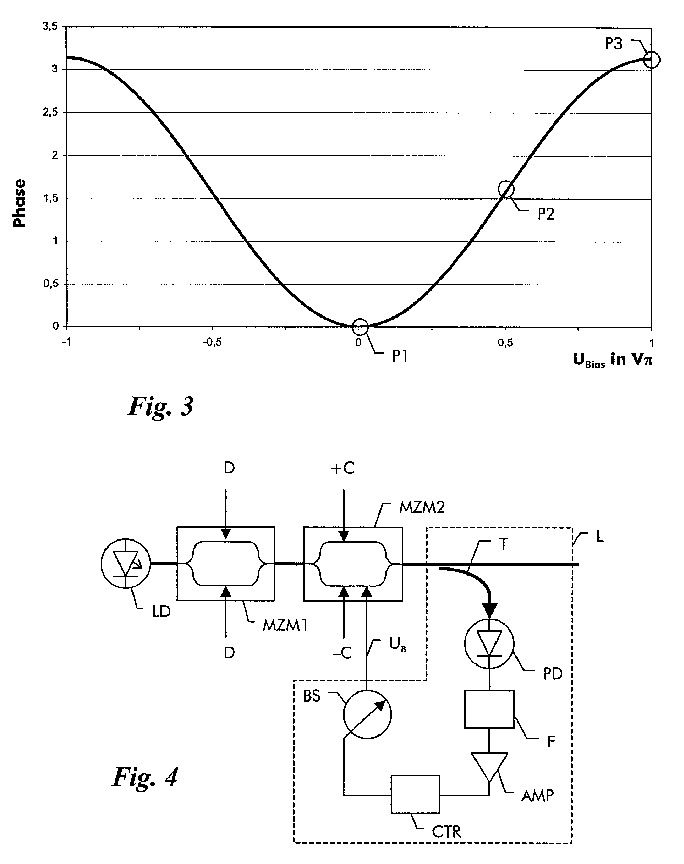

The phase shift in either of the two modulator branches depends on the external voltage applied to the corresponding electrode. In order to operate the MZM properly, the operation point, i.e., the point where in absence of any other external signal, the phase difference between the two branches has a predefined nominal value, must be set by applying an external DC bias voltage (not shown in figure 2). Figure 3 shows in a diagram the phase deviation as a function of the normalized bias voltage. The curve has substantially a cosine shape. Point P1 is the point where there is no phase difference between the two modulator branches, i.e., the point of maximum transmittance of the modulator. This point is also known as the quadrature bias point. Point P2 is the 3dB point, where the output of the modulator has reached -3dB from the maximum value. At this point, the phase difference between the two branches is π/2 (or 90°). At point P3, which is another quadrature bias point, the phase difference between the two branches has reached π (or 180°) and the transmittance of the modulator has thus reached its minimum. The normalized bias voltage is shown in values of Vπ, i.e., in multiples of the voltage value necessary to shift the phase by an amount of π.

In principle, the operation point can be set to either of these three points P1, P2 or P3. At point P2, the clock signal needs to have an amplitude of only 2*Vπ/2 but a frequency B that equals the bitrate of the data signal. This modulation scheme is called RZ-50%. At point P1, the clock signal must have an amplitude of 2*Vπ but at only half the frequency B/2. This modulation scheme is called RZ-66%. The same is true for point P3, where the modulation is then called RZ-33%.

The invention is applicable only to RZ modulation formats and DPSK modulation formats where the Mach-Zehnder modulator is biased at minimum or maximum of transmission, i.e., at a quadrature bias point. This bias condition is applied for NRZ-DPSK modulation and for RZ modulation formats with 66% (known as the carrier suppressed scheme) and 33% modulation formats.

As explained in the outset, the data rate of data signal D is 42,6 GB/s, which is the highest rate defined for the new Optical Transport Network (OTN, see ITU-T G-709). For RZ-66% and RZ-33% modulation, a clock signal with a frequency of 21,3 GHz is thus required. At the quadrature bias point, this electrical RF modulation at 21.3 GHz is converted to an optical modulation with 42.6 GHz. The order of the modulators for data and clock can be altered. The modulator for the clock is generating either optical RZ pulses from cw input, or RZ data output signal from NRZ data input signal. The important point is, however, that at the optimum bias conditions an optical modulation at 21.3 GHz is suppressed.

The invention makes use of this fact and monitors the optical output signal for a signal line at half the data rate, i.e., at 21,3 GHz. The basic idea of the present invention is to actively control the operating point of the modulator to drive this line to a minimum.

Figure 4 shows an according control loop employed in the optical transmitter from figure 1. Laser diode LD generates an optical cw carrier signal which is fed to the first Mach-Zender modulator MZM1. MZM1 is driven by the data signal D having a constant bitrate of 42,6 GB/s and thus applies a corresponding NRZ phase modulation to the carrier. The phase modulated signal is fed to the second Mach-Zehnder modulator MZM2, which is differentially driven by an RZ clock signal +C and the complementary RZ clock signal -C. The modulator MZM2 is biased with a DC bias voltage U_{B} to one of its quadrature bias points. The bias voltage U_{B} is a constant voltage signal that is generated by an appropriate adjustable voltage generator (or voltage source) BS. The clock signal is a sinusoidal AC voltage signal having a frequency of 21,3 GHz, i.e. to half the bitrate value of the data signal D.

The modulator output is monitored via a 20dB optical tap T. The monitor output of tap T is fed to a photodiode PD, which generates an electrical monitor signal. Alternatively, the electrical monitor signal can de derived from an integrated monitor photodiode in the modulator package. The electrical monitor signal is filtered by a band-pass filter F for the desired spectral line at half the bitrate value, i.e., at 21,3 GHz and amplified by an amplifier AMP. The filtered and amplified electrical signal is then fed to a controller CTR which adjusts the bias voltage U_{B} to drive the monitor signal to a minimum. In other words, the controller CTR minimizes via the control loop L the 21.3 GHz RF power in the optical signal and thus optimizes the bias voltage of modulator MZM2 for optimum RZ system performance.

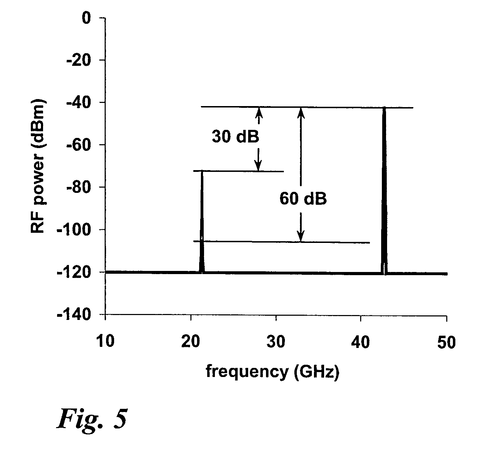

Figure 5 shows the RF spectrum of the monitor signal. The RF power in dBm is shown as a function of the frequency in GHz. At 42,6 GHz, we will find the main signal line that corresponds to the RZ-DPSK modulation. A smaller line at 21,3 GHz corresponds to the clock modulation. At optimum bias condition, the intensity of the clock line is 60 dB smaller than the signal line at 42,6 GHz. We have then detuned the bias voltage a little bit and found that the clock line grew to -30dB of the main signal line while the OSNR penalty was only 0,2 dB. We found that the suppression of RF power between f and (f/2) varies between 30 dB and 60 dB, while the OSNR penalty is only 0.2 dB. This shows that the changes of the RF power at f/2 (21.3GHz) are very significant and the bias stabilization thus very sensitive.

This simple but powerful technique can be used to stabilize all types of RZ-modulation formats or, more general, Mach-Zehnder components used at transmitter and receiver side. An example for the latter one is a Mach-Zehnder demodulator for DPSK modulation formats. In other words, the invention can also be applied to MZ-type demodulators at the receiver side, i.e. those used for demodulation of DPSK modulated signals and in balanced receivers. Again at optimum conditions for demodulation the 21.3 GHz line is suppressed.

The invention is particularly useful when the optical signal is time-division multiplexed from multiple - preferably four - tributaries. Without proper stabilization, different tributaries might have different amplitude values and thus show different bit-error rates. With a stabilization of the operating point according to the invention, the system performance is the same for all tributaries.

It has to be noted that the invention is not limited to the particular embodiments and values given above. Conversely, various modifications would be apparent to those skilled in the art after having read and understood the above-described embodiments of the invention. For example, the invention is not limited to z-cut modulator types but would be equally applicable to x- or y-cut modulators. Moreover, the invention is not limited to the particular frequency and data rate values used but could also be applied at higher or lower rates. The invention is also not limited to RZ-DPSK modulation but could be equally utilized for RZ-ASK modulation and is thus very useful for many optical transmission systems. Furthermore, data and clock modulation can also be applied with a single Mach-Zehnder modulator.

## Claims

1. A method of controlling in an optical transmission system, employing an RZ modulation scheme to an optical signal carrying a data signal (D) having a data rate B, the operating point of a Mach-Zehnder device (MZM2) biased at a quadrature bias point
**characterized by** the steps of
- applying a bias voltage (U_{B}) to said Mach-Zehnder device (MZM2) to set its operating point to said quadrature bias point,
- monitoring a frequency component of an output signal from said Mach-Zehnder device (MZM2) at a frequency of B/2;
- adjusting said bias voltage (U_{B}) to minimize the intensity of said frequency component at the frequency B/2.

2. A method according to claim 1, wherein said Mach-Zender device (MZM2) is a modulator in a transmitter, said method further comprising the steps of:
- generating a continuous wave optical carrier signal;
- applying a NRZ modulation to said carrier signal using said data signal (D) having the data rate of B; and
- applying in said Mach-Zehnder modulator (MZM2) an RZ modulation to said carrier signal using a clock signal (C) having a frequency of B/2.

3. A method according to claim 2, wherein the clock signal (C) is a sinusoidal clock signal.

4. A circuit arrangement for use in an optical transmission system, employing an RZ modulation scheme to an optical signal carrying a data signal (D) having a data rate B, said circuit arrangement comprising a Mach-Zehnder device and a bias voltage source (BS) for applying a bias voltage (U_{B}) to said Mach-Zehnder device (MZM2) for setting the operating point of said device (MZM2) to a quadrature bias point
**characterized by**
a controller (CTR) for monitoring a frequency component of an output signal of said Mach-Zehnder device (MZM2) at a frequency of B/2 and for controlling said bias voltage source (BS) to adjust said bias voltage (U_{B}) to minimize the intensity of said frequency component at the frequency B/2.

5. A transmitter for generating in an optical transmission system an RZ-modulated optical signal carrying a data signal (D) having a data rate B; said transmitter comprising, a Mach-Zehnder modulator (MZM2) for applying a clock signal (C) to said optical signal and a bias voltage source (BS) for applying a bias voltage (U_{B}) to said Mach-Zehnder modulator (MZM2) for setting its operating point to a quadrature bias point
**characterized by**
a controller (CTR) for monitoring a frequency component of an output signal of said Mach-Zehnder modulator (MZM2) at a frequency of B/2 and for controlling said bias voltage source (BS) to adjust said bias voltage (U_{B}) to minimize the intensity of said frequency component at the frequency B/2.

6. A transmitter according to claim 5, comprising a laser light source (LD) for generating a continuous wave optical carrier signal and a second modulator (MZM1) for applying said a data signal (D) being a NRZ electrical signal to said optical carrier signal.

7. A transmitter according to claim 5, wherein said controller is part of a control loop (L) in said transmitter; said control loop comprising a tap (T) for extracting a light portion from the output signal of said Mach-Zehnder modulator (MZ2); a photo detector (PD) for converting said light signal into an electrical monitor signal; a filter (F) for filtering said light signal to isolate a frequency component at said frequency of B/2, and an amplifier (AMP) for amplifying said extracted frequency component for further evaluation by said controller (CTR).

8. A transmitter for use in a transmission system employing an RZ modulation scheme to an optical signal carrying a data signal (D) having a data rate B, said receiver comprising a circuit arrangement comprising a Mach-Zehnder device for demodulating said optical signal and a bias voltage source (BS) for applying a bias voltage (U_{B}) to said Mach-Zehnder device (MZM2) for setting the operating point of said device (MZM2) to a quadrature bias point
**characterized by**
a controller (CTR) for monitoring a frequency component of an output signal of said Mach-Zehnder device (MZM2) at a frequency of B/2 and for controlling said bias voltage source (BS) to adjust said bias voltage (U_{B}) to minimize the intensity of said frequency component at the frequency B/2.
